# EUROPEAN PATENT SPECIFICATION

(11) **EP 1 512 057 B1**
(45) Date of publication and mention of the grant of the patent: **06.01.2010**
(21) Application number: 03727701.9
(22) Date of filing: 28.05.2003
(51) Int. Cl.: G06F 21/02, H04M 1/725

(54) **TRUSTED USER INTERFACE FOR A SECURE MOBILE WIRELESS DEVICE**
VERTRAUTE BENUTZERSCHNITTSTELLE FÜR EIN SICHERES SCHNURLOSES MOBILGERÄT
INTERFACE UTILISATEUR DE CONFIANCE POUR DISPOSITIF SANS FIL MOBILE SECURISE

(30) Priority: 28.05.2002 GB 0212308
(43) Date of publication of application: 09.03.2005
(73) Proprietor: Nokia Corporation, 02150 Espoo (FI)
(72) Inventor: DIVE-RECLUS, Corinne, St Albans Herts AL1 4SE (GB); THOELKE, Andrew, Wembley Middlesex HA0 3QH (GB); MAY, Dennis, London SE24 0HD (GB)
(86) International application number: PCT/GB2003/002309
(87) International publication number: WO 2003/100580

(56) References cited:
- EP-A- 0 436 518
- EP-A- 1 329 787
- WO-A-00/73913
- WO-A-01/17296
- WO-A-01/23980
- WO-A-03/003170

## Description

### FIELD OF THE INVENTION

This invention relates to a trusted user interface for a secure mobile wireless device. The user interface forms an element of a platform security architecture.

### DESCRIPTION OF THE PRIOR ART

Platform security covers the philosophy, architecture and implementation of platform defence mechanisms against malicious or badly written code. These defence mechanisms prevent such code from causing harm. Malicious code generally has two components: a payload mechanism that does the damage and a propagation mechanism to help it spread. They are usually classified as follows:
Trojan horse: poses as a legitimate application that appears benign and attractive to the user.
Worm: can replicate and spread without further manual action by their perpetrators or users.
Virus: Infiltrates legitimate programs and alters or destroys data.

Security threats encompass (a) a potential breach of confidentiality, integrity or availability of services or data in the value chain and integrity of services and (b) compromise of service function. Threats are classified into the following categories:
1. Threats to confidentiality and integrity of data. Examples: Get user's password; corrupt files.
2. Threats to confidentiality and integrity of services. Examples: Use bandwidth from phone network subscriber without paying for it; repudiate transaction with network service provider.
3. Threats to availability of service (also called denial of service). Examples: Prevent the user from sending a text message; prevent the user from accepting a telephone call.

Games are an important application category for mobile wireless devices, but expose the device to high levels of security risk. Usually, games require direct access to the screen memory or to a graphic accelerator in order to perform fast bitmap operations. However, allowing direct access to the screen is an open door to the following threats:

### 1. Denial of service

1.1. Make the screen unreadable by erasing/scrambling pixel values
1.2. Display fake error messages to prevent the user to use some applications

### 2. Confidentiality breach

2.1. Fake trusted user interface dialogs to get confidential data as password
2.2. Capture pixel values written by another application to retrieve confidential data

Hence, conventional screen memories (also known as frame buffers) present an Achilles heel to platform security since applications such as malicious or badly written games can grab or alter sensitive information (e.g. passwords etc.) displayed on screen. Hewlett Packard WO-A-00/73913 shows one possible approach to solving this aspect of platform security: it discloses a PC with a secondary, secure hardware system (video chip, frame buffer) to prevent unauthorised access to sensitive information. The user interface can therefore be thought of as trusted when sensitive information is being displayed. This hardware solution would however be prohibitively expensive to implement in a mobile wireless device (typically a 'smartphone', enhanced mobile telephone, PDA or other personal, portable computing device) because of space and cost constraints.

Further prior and solutions are disclosed in WO-A-01/17296, EP-A- 0 43 6518, WO-A- 01/23980 and EP-A- 1329 787; and in Jeremy Epstein et al, "A prototype B3 Trusted X Window System", Proceedings, Seventh Annual Computer Security Applications Conference 1991, San Antonio, TX, USA 2-6 December 1991.

Hence, mobile wireless devices offer very considerable challenges to the designer of a platform security architecture. To date, there have been no effective proposals for trusted user interfaces for secure mobile wireless devices.

### SUMMARY OF THE PRESENT INVENTION

In a first aspect of the present invention, there is a mobile wireless device **characterised in that** it is programmed with software which provides a trusted user interface for the device by allowing the content of a secure screen memory to be accessible or modifiable only by authorised applications, the software operating automatically to detect whether an application is an authorised application using a capability of the application, a capability being a property assigned to executable code which defines the sensitive actions which that code can perform or the sensitive resources which that code can access.

In one implementation, the address locations of the secure screen memory are known only to the window server and the kernel, which can make this memory available solely to executable code with the appropriate capability.

Secure and non-secure frame buffers are usually physically distinct parts of the same RAM based screen memory and hence no costly hardware duplication is required for implementation (e. g. no separate secure hardware crypto-processor, memory or display processor, as required in some prior art solutions).

The secure screen memory provides a trusted resource so that sensitive dialogs (e. g. entering PINs or digitally signing a document) can take place in a secure environment. Normally, the *entire* screen memory address is public information, making the entire screen memory fully available to any application; hence, even sensitive dialogs would use screen memory which can in theory be looked at by malicious Software, enabling that malicious code to grab PIN data etc. or corrupt a trusted user interface.

But with the present invention, unauthorised applications are prevented from accessing the data displayed by the secure frame buffer because they are able to access only the non-secure screen memory. Hence, malicious applications cannot retrieve data from a trusted dialog or compromise that data. Further, as the present invention is a software only solution, it requires no new hardware per se - the only requirement is that the software window server and the video device driver run by the kernel can select content from different parts of screen memory - i.e. secure and non-secure frame buffers.

A further feature is that input events such as keyboard, mouse and pen events are collected by the kernel and sent to the window server only. The window server is responsible for dispatching events to the appropriate window's process owner. In trusted user interface (UI) mode, no input events can be globally captured or redirected in order to prevent an untrusted application to grab sensitive information typed by the user, such as a password.

In an implementation, there is a visual indication is provided to the user when the trusted user interface is active; the indication can be hardware based, such as a particular LED being lit. It can also be software based, such as a particular screen icon or message being displayed in an area of the screen forbidden to other applications. In all cases it is under the control of the kernel. Only the window server, owner of the secure frame buffer, can ask the kernel to switch this indicator on or off, hence providing a way for the user to identify a genuine trusted dialog from a fake one.

In another aspect, there is an operating system adapted to run on a secure mobile wireless device in which the operating system provides a trusted user interface for the device by allowing the content of a secure screen memory to be modifiable only by authorised applications.

### DETAILED DESCRIPTION

The present invention will be described with reference to the security architecture of the Symbian OS object oriented operating system, designed for single user wireless devices. The Symbian OS operating system has been developed for mobile wireless devices by Symbian Ltd, of London United Kingdom.

In this architecture, a trusted path between the user and the OS kernel is provided: this prevents untrusted applications from retrieving or compromising data from a trusted dialog.

### 1 Trusted Computing Platform

### 1.1 Trusted Computing Base

A trusted computing base (TCB) is a basic architectural requirement for robust platform security. The trusted computing base consists of a number of architectural elements that cannot be subverted and that guarantee the integrity of the device. It is important to keep this base as small as possible and to apply the principle of least privilege to ensure system servers and applications do not have to be given privileges they do not need to function. On closed devices, the TCB consists of the kernel, loader and file server; on open devices the software installer is also required. All these processes are system-wide trusted and have therefore full access to the device. This trusted core would run with a "root" capability not available to other platform code (see section 2.1).

There is one other important element to maintain the integrity of the trusted computing base that is out of the scope of this invention, namely the hardware. In particular, with devices that hold trusted computing base functionality in flash ROM, it is necessary to provide a secure boot loader to ensure that it is not possible to subvert the trusted computing base with a malicious ROM image.

### 1.2 Trusted Computing Environment

Beyond the core, other system components would be granted restricted orthogonal system capabilities and would constitute the Trusted Computing Environment (TCE); they would include system servers such as phone and window servers... For instance the window server would not be granted the capability of phone stack access and the phone server would not be granted the capability of direct access to keyboard events. It is strongly recommended to give as few system capabilities as possible to a software component to limit potential damage by any misuse of these privileges.

The TCB ensures the integrity of the full system as each element of the TCE ensures the integrity of one service. The TCE cannot exist without a TCB but the TCB can exist by itself to guarantee a safe "sand box" for each process.

### 2 Process Capabilities

A capability can be thought of as an access token that corresponds to a permission to undertake a sensitive action. The purpose of the capability model is to control access to sensitive system resources. The most important resource that requires access control is the kernel executive itself and a *system* capability (see section 2.1) is required by a client to access certain functionality through the kernel API. All other resources reside in user-side servers accessed via IPC [Inter Process Communication]. A small set of basic capabilities would be defined to police specific client actions on the servers. For example, possession of a *make calls* capability would allow a client to use the phone server. It would be the responsibility of the corresponding server to police client access to the resources that the capability represents. Capabilities would also be associated with each library (DLL) and program (EXE) and combined by the loader at run time to produce net process capabilities that would be held by the kernel. For open devices, third party software would be assigned capabilities either during software installation based on the certificate used to sign their installation packages or post software installation by the user,. The policing of capabilities would be managed between the loader, the kernel and affected servers but would be kernel-mediated through the IPC mechanism.

The key features of the process capability model are:
- It is primarily focused around system servers and client-server IPC interactions between these entities.
- Capabilities are associated with processes and not threads. Threads in the same process share the same address space and memory access permissions. This means that any data being used by one thread can be read and modified by all other threads in the same process.
- The policing of the capabilities is managed by the loader and kernel and through capability policing at the target servers. The kernel IPC mechanism is involved in the latter.
- When the code is not running, capabilities are stored inside of libraries and programs. Capabilities stored in libraries and programs are not modifiable, as they would be stored during installation in a location that is only accessible by the Trusted Computing Base.
- Not all servers would have to handle client capabilities. Servers would be responsible for interpreting capabilities as they wish.
- The only cryptography involved in this scheme might be at the software installation stage where certificates would be checked off against a suitable root certificate.

### 2.1 System capabilities: Protecting the integrity of the device

### Root. "Full access to all files - Can modify capabilities associated with executables " "Root" capability - Used by the Trusted Computing Base only, it gives full access to all files in the device.

### System capabilities

Some system servers require some specific access to the Trusted Computing Base. Because of the object-oriented implementation of Symbian OS, the kind of resources required by a system server is most of the time exclusive to it. Therefore, one system server would be granted some system capability that would be orthogonal to those required by another. For instance, the window server would be granted access to keyboard and pen events issued by the kernel but it would not have permission to access the phone stack. In the same way, the phone server would be granted access to the phone stack but would not have permission to collect events from the kernel.

As examples, we can name:

| | |
|---|---|
| **WriteSystemData** | Allows modification of configuration system data |
| **CommDD** | Grants access to all communication and Ethernet card device drivers. |
| **DiskAdmin** | Can perform administration task on the disk (reformat, rename a drive,...). |

### 2.2 User-exposed capabilities: Mapping real-world permissions

The process of generating capabilities can be difficult. One has first to identify those accesses that require policing and then to map those requirements into something that is meaningful for a user. In addition, more capabilities means greater complexity and complexity is widely recognised as being the chief enemy of security. A solution based on capabilities should therefore seek to minimise the overall number deployed. The following examples map fairly broadly onto the main threats which are unauthorised access to system services (eg. the phone stack) and preserving the confidentiality/integrity of user data.

### PhoneNetwork. "Can access phone network services and potentially spend user money"

"Make telephone calls"
"Send short text messages".

### WriteUserData. "Can read and modify users private information"

"Add a contact".
"Delete an appointment".

### ReadUserData. "Can read users private information"

"Access contacts data".
"Access agenda data".

### LocalNetwork. "Can access local network"

"Send Bluetooth messages".
"Establish an IR connection"
"Establish an USB connection"

### Location. " Can access the current location of the device"

"Locate the device on a map"
"Display closest restaurants and cinema"

It is necessary to make a distinction between PhoneNetwork and LocalNetwork because it is possible to transmit information across a network without spending any money (eg. Bluetooth piconet). This kind of access may be a very useful third party software enabler but nonetheless represents a local way of leaking sensitive information via a trojan horse so it must be protected with a capability, albeit LocalNetwork. PhoneNetwork, if granted by the user, would allow trojans seeking to use the phone network as their exit route; that is potentially much more damaging and hence the blunt warning in its description.

Root and system capabilities are mandatory; if not granted to an executable, the user of the device cannot decide to do it. Their strict control ensures the integrity of the Trusted Computing Platform. However the way servers check user-exposed capabilities or interpret them may be fully flexible and even user-discretionary.

### 2.3 Assigning capabilities to a process

The association of a run-time capability with a process involves the loader. In essence, it transforms the static capability settings associated with individual libraries and programs into a run-time capability that the kernel holds and can be queried through a kernel user library API. The loader applies the following rules:
Rule 1. When creating a process from a program, the loader assigns the same set of capabilities as its program's.
Rule 2. When loading a library within an executable, the library capability set must be *greater than or equal to* the capability set of the loading executable. If not true, the library is not loaded into the executable.
Rule 3. An executable can load a library with higher capabilities, but does not gain capabilities by doing so.
Rule 4. The loader refuses to load any executable not in the data caged part of the file system reserved to the TCB.

### It has to be noted that:

- Libraries' capabilities are checked at load time only. Beyond that, all code contained in libraries is run freely and is assigned the same capability set as the program it runs into when initiating some IPC calls.
- For ROM images with execution in place, the ROM build tool resolves all symbols doing the same task as the loader at runtime. Therefore the ROM build tool must enforce the same rules as the loader when building a ROM image.

### These rules

- Prevent malware from being loaded in sensitive processes, for example, a plug-in in a system server
- Encourage encapsulation of sensitive code inside processes with no possible bypass
   The examples below show how these rules are applied in the cases of statically and dynamically loaded libraries respectively.

### 2.3.1 Examples for linked DLLs

The program P.EXE is linked to the library L1.DLL.

The library L1.DLL is linked to the library L0.DLL.

### Case 1:

P.EXE holds Cap1 & Cap2
L1.DLL holds Cap1 & Cap2 & Cap3
L0.DLL holds Cap1 & Cap2.
Process P cannot be created, the loader fails it because L1.DLL cannot load L0.DLL. Since L0.DLL does not have a capability set greater than or equal to L1.DLL, Rule 2 applies.

### Case 2:

P.EXE holds Cap1 & Cap2
L1.DLL holds Cap1 & Cap2 & Cap3
L0.DLL holds Cap1 & Cap2 & Cap3 & Cap4
Process P is created, the loader succeeds it and the new process is assigned Cap1 & Cap2. The capability of the new process is determined by applying Rule 1; L1.DLL cannot acquire the Cap4 capability held by L0.DLL, and P1.EXE cannot acquire the Cap3 capability held by L1.DLL as defined by Rule 3.

### 2.3.2 Examples for dynamically loaded DLLs

The program P.EXE dynamically loads the library L1.DLL.

The library L1.DLL then dynamically loads the library L0.DLL.

### Case 1:

P.EXE holds Cap1 & Cap2
L1.DLL holds Cap1 & Cap2 & Cap3
L0.DLL holds Cap1 & Cap2
Process P is successfully created and assigned Cap1 & Cap2.
   When P requests the loader to load L1.DLL & L0.DLL, the loader succeeds it because P can load L1.DLL and L0.DLL. Rule 2 does apply here the loading executable being the process P not the library L1.DLL: the IPC load request that the loader processes is sent by the process P. The fact that the call is within L1.DLL is here irrelevant. Rule 1 & 3 apply as before and P does not acquire Cap3 by loading L1.DLL

### Case 2:

P.EXE holds Cap1 & Cap2
L1.DLL holds Cap1&Cap2&Cap3
L0.DLL holds Cap1&Cap2&Cap4
Process P is successfully created and assigned Cap1 & Cap2. When P requests the loader to load L1.DLL & L0.DLL, the loader succeeds it because P can load L1.DLL and L0.DLL Once again, Rule 2 does apply with P as the loading executable rather than L1.DLL, while Rule 3 ensures P acquires neither Cap3 nor Cap4.

### 3 Trusted UI

The preferred implementation defines a *system* capability called TrustedUI. Processes running with this capability are defined as trusted for using the trusted user interfaces.

### 3.1 Identification of trusted dialogs by the user.

A trusted user interface is required to prevent spoofing of trusted user interface by malicious third party software and thereby provide a trusted path to the user interface within the TCB. This is very important, particularly as we move to the world of multi-functional trusted personal devices acting as smart wallets. For instance, both the PIN enter dialog and the transaction sign dialog would benefit from a comprehensive trusted user interface. If lacking, a malicious application could steal PIN data and use data protected by this PIN without the knowledge of the user.

There are two ways of showing that a trusted user interface is active:
- Trusted hardware indicator: For example a trusted LED which goes on when a trusted user interface interaction occurs. This indicator would be accessed through a device driver dedicated to the window server. The window server would ask the kernel to switch this LED on when it would receive a genuine request to display a trusted dialog within a trusted user interface session. At the end of this session, the window server would ask the kernel to switch the LED off.
- Trusted software indicator: For example a particular symbol/logo on trusted dialogs in a specific part of the screen not accessible to non-executive code. A trusted software indicator would require removal of access to video RAM from general user mode code for this specific part of the screen.

### 3.2 Trusted screen/keyboard

However, trusted dialogs within the context of the Symbian OS platform is about more than a trusted visual indicator and would raise further requirements on client access to the display manager APIs (eg. the window server). It is also about displaying information in a frame buffer that untrusted applications (like games) cannot access and ensuring that keystrokes cannot be captured from a trusted dialog by an untrusted application.

### 3.3 Identification of Use Cases

Games are valuable because of their popularity amongst customers. Their numbers, qualities and "play-ability" are often used as main selling point for smart phones. Usually games require direct access to the screen memory or to a graphic accelerator in order to perform fast bitmap operations. However allowing direct access to the screen is an open door to the following threats:
- Denial of service
   ○ Make the screen unreadable by erasing/scrambling pixel values
   ○ Display fake error messages to prevent the user to use some applications
- Confidentiality breach
   ○ Fake trusted user interface dialogs to get confidential data as password
   ○ Capture pixel values written by another application to retrieve confidential data

If the economic risk of denial of service attacks is low (the user cannot use his device but other users, network operators and service providers are not touched), the attacks on confidential data are more serious. The attacker might be able to breach the user's privacy and/or to spend user's money by accessing confidential data.

To sum up, games have got two main characteristics that require contradictory security features:
- Games usually need a direct access to the display memory or a direct access to a graphic accelerator driver. Based on the definition of capabilities and the trusted computing environment, they must be granted some system capabilities.
- Games are often provided by third parties. They cannot be trusted per se and their audit would imply a long and expensive process that few third parties would like to do.
   It is a fundamental security feature that system capabilities must be restricted to core components only. The more applications are granted system capabilities the less relevant the capability model is. This poses a particular challenge for games.

### 3.4 Giving direct screen access to games without compromising trusted dialogs

Conventionally, the screen memory address is mapped as global, so in practice every application knowing the address can access the screen memory directly. This address is fixed for each type of mobile wireless devices and therefore if published it can be reused by anyone for this device.
An implementation of the present invention physically separates the screen memory associated with untrusted applications from the screen memory used by trusted dialogs. The window server will be liable for telling the video driver which frame buffer should be displayed.

### 3.4.1 Assumptions

1. One frame buffer (called Fb1) is used by untrusted applications and its address is mapped as global in RAM.
2. The window server (WSERV) is part of the TCE.
3. The second frame buffer (called Fb2) is used by trusted applications to display secure dialogs. Its memory address is protected and can be seen only by the window server and the kernel..
4. The untrusted application is called Game.
5. The application TApp has been granted TrustedUI system capability.
6. UI session, a client-server session between an application and the window server.
7. The device has got a trusted LED only modifiable by the window server and the kernel.

### 3.4.2 Game uses Fb1 address directly

1. Game writes or reads pixel values directly from Fb1.

### 3.4.3 TApp asks for WSERV services

1. TApp connects WSERV.
2. TApp asks WSERV to create a trusted UI session
3. WSERV retrieves TApp's capabilities from the kernel. WSERV verifies that Tapp has got TrustedUI system capability.
4. WSERV asks the kernel to use Fb2 as current frame buffer and switch the LED on.
5. The kernel verifies that the call is made by WSERV.
6. The kernel switches the trusted user interface LED on and activates Fb2 on the video card.
7. TApp can create a trusted dialog.

### 3.4.4 Game asks for WSERV services

1. Game connects WSERV.
2. Game asks WSERV to create a trusted UI
3. WSERV retrieves Game's capabilities from the kernel. WSERV verifies that Game has not got TrustedUI.
4. WSERV disconnects Game.

### 3.4.5 TApp closes its trusted UI session

1. TApp asks WSERV to close its trusted session.
2. WSERV closes TApp's trusted session.
3. WSERV asks the kernel to use Fb1 and switch the LED off.
4. The kernel verifies that the request is made by WSERV.
5. The kernel switches the trusted user interface LED off and reactivates Fb1 on the video card.

### 3.4.6 Conclusions

Even if "two frame buffers" requires more screen memory, it is a good solution for the following reasons
1. It does not change the behaviour of the code already written; Fb1 is still global.
2. The kernel does not need to change MMU mappings in client space.
3. Untrusted applications do not have to terminate or to be killed if the display is required by a trusted dialog. They just continue to use the public screen buffer even if this one is not visible to the user.
4. There is physical screen memory segregation.

In order to protect the user against fake trusted dialog attacks, a LED or reserved screen space must be used. A LED would be preferable, saving screen space and probably be more easily understood by users.

## Claims

1. A mobile wireless device **characterised in that** it is programmed with software which provides a trusted user interface for the device by allowing the content of a secure screen memory to be accessible or modifiable only by authorised applications, the software operating automatically to detect whether an application is an authorised application using a capability of the application, a capability being a property assigned to executable code which defines the sensitive actions which that code can perform or the sensitive resources which that code can access.

2. The device of Claim 1 in which the address locations of the secure screen memory are known only to the window server and the kernel, which can make this secure screen memory available to executable code with the appropriate capability.

3. The device of Claim 2 in which the window server is part of a trusted computing environment.

4. The device of Claim 1 in which secure parts and non-secure parts of the screen memory are physically distinct parts of the same RAM based screen memory.

5. The device of Claim 1 which provides a visual indication of the status of the trusted user interface.

6. The device of Claim 5 in which the visual indication is a LED.

7. The device of Claim 5 in which the visual indication is a particular screen icon or message.

8. The device of Claim 5 in which the visual indication can be modified by the window server and the kernel only.

9. The device of Claim 5 in which the window server changes the visual indication only when the trusted user interface is enabled or disabled.

10. The device of Claim 1 in which input events generated by the user as keyboard, mouse and pen events can be retrieved from the kernel only by the window server.

11. The device of Claim 10 in which the window server does not allow input events generated within the trusted user interface to be retrieved by a process that is not the trusted dialog owner.

12. Computer software which, when running on a mobile wireless device, causes the device to become a device as defined in any of Claims 1-11.

## Patentansprüche

1. Drahtloses Mobilgerät, **dadurch gekennzeichnet, dass** es mit Software programmiert ist, die eine vertrauenswürdige Benutzerschnittstelle für das Gerät bereitstellt, indem sie erlaubt, dass der Inhalt eines gesicherten Bildschirmspeichers nur für zugelassene Anwendungen zugänglich oder änderbar ist, wobei die Software automatisch funktioniert, um zu erfassen, ob eine Anwendung eine zugelassene Anwendung ist, indem eine Fähigkeit der Anwendung verwendet wird, wobei eine Fähigkeit eine Eigenschaft ist, die exekutierbarem Code zugewiesen ist, der die vertraulichen Aktionen definiert, die der Code ausführen kann, oder die vertraulichen Ressourcen, auf die dieser Code zugreifen kann.

2. Gerät nach Anspruch 1, bei dem die Adresslokalisierungen des gesicherten Bildschirmspeichers nur dem Fensterserver und dem Kern (kernel) bekannt sind, die diesen gesicherten Bildschirmspeicher für exekutierbaren Code mit der entsprechenden Fähigkeit zugänglich machen können.

3. Gerät nach Anspruch 2, bei dem der Fensterserver zu einer vertrauenswürdigen Rechenumgebung gehört.

4. Gerät nach Anspruch 1, bei dem gesicherte Teile und nicht gesicherte Teile des Bildschirmspeichers physikalisch getrennte Teile des gleichen auf RAM basierenden Bildschirmspeichers sind.

5. Gerät nach Anspruch 1, das eine visuelle Anzeige des Zustands der vertrauenswürdigen Benutzerschnittstelle bereitstellt.

6. Gerät nach Anspruch 5, bei dem die visuelle Anzeige eine LED ist.

7. Gerät nach Anspruch 5, bei dem die visuelle Anzeige ein bestimmtes Bildschirmsymbol oder eine bestimmte Bildschirmmeldung ist.

8. Gerät nach Anspruch 5, bei dem die visuelle Anzeige nur von dem Fensterserver und dem Kern geändert werden kann.

9. Gerät nach Anspruch 5, bei dem der Fensterserver die visuelle Anzeige nur ändert, wenn die vertrauenswürdige Benutzerschnittstelle aktiviert oder deaktiviert wird.

10. Vorrichtung nach Anspruch 1, bei der Eingabeereignisse, die von dem Benutzer als Tastatur-, Maus- und Stiftereignisse erzeugt werden, von dem Kern nur durch den Fensterserver abgerufen werden können.

11. Vorrichtung nach Anspruch 10, bei der der Fensterserver nicht erlaubt, dass Eingabeereignisse innerhalb der vertrauenswürdigen Benutzerschnittstelle von einem Prozess abgerufen werden, der nicht der vertrauenswürdige Dialogeigentümer ist.

12. Computersoftware, die, wenn sie auf einem drahtlosen Mobilgerät läuft, das Gerät zu einer Vorrichtung nach einem der Ansprüche 1 bis 11 macht.

## Revendications

1. Dispositif sans fil mobile, **caractérisé en ce qu'**il est programmé avec un logiciel qui fournit une interface utilisateur sécurisée pour le dispositif en autorisant que le contenu d'une mémoire d'écran sécurisée soit accessible ou modifiable uniquement par des applications autorisées, le logiciel fonctionnant automatiquement pour détecter si une application est une application autorisée en utilisant une capacité de l'application, une capacité étant une propriété assignée à un code exécutable qui définit les actions sensibles que ce code peut effectuer ou les ressources sensibles auxquelles ce code peut accéder.

2. Dispositif selon la revendication 1, dans lequel les emplacements d'adresse de la mémoire d'écran sécurisée sont connus uniquement par le serveur de fenêtre et le noyau, qui peuvent mettre cette mémoire d'écran sécurisée à la disposition du code exécutable avec la capacité appropriée.

3. Dispositif selon la revendication 2, dans lequel le serveur de fenêtre fait partie d'un environnement informatique sécurisé.

4. Dispositif selon la revendication 1, dans lequel des parties sécurisées et des parties non sécurisées de la mémoire d'écran sont des parties physiquement distinctes de la même mémoire d'écran basée sur RAM.

5. Dispositif selon la revendication 1, qui fournit une indication visuelle du statut de l'interface utilisateur sécurisée.

6. Dispositif selon la revendication 5, dans lequel l'indication visuelle est une LED.

7. Dispositif selon la revendication 5, dans lequel l'indication visuelle est une icône ou un message d'écran particulier.

8. Dispositif selon la revendication 5, dans lequel l'indication visuelle peut être modifiée uniquement par le serveur de fenêtre et le noyau.

9. Dispositif selon la revendication 5, dans lequel le serveur de fenêtre change l'indication visuelle uniquement lorsque l'interface utilisateur sécurisée est activée ou désactivée.

10. Dispositif selon la revendication 1, dans lequel des événements d'entrée générés par l'utilisateur en tant qu'événements de clavier, de souris et de crayon peuvent être extraits du noyau uniquement par le serveur de fenêtre.

11. Dispositif selon la revendication 10, dans lequel le serveur de fenêtre ne permet pas à des événements d'entrée générés à l'intérieur de l'interface utilisateur sécurisée d'être extraits par un processus qui n'est pas le propriétaire de dialogue sécurisé.

12. Logiciel informatique qui, lorsqu'il s'exécute sur un dispositif sans fil mobile, amène le dispositif à devenir un dispositif selon l'une quelconque des revendications 1 à 11.
